(19) Europäisches Patentamt

European Patent Office

Office européen des brevets

(11) **EP 2 760 237 A1**

(12) **EUROPEAN PATENT APPLICATION**

(43) Date of publication:
**30.07.2014 Bulletin 2014/31**

(51) Int Cl.:
**H04W 36/04** *(2009.01)*     **H04W 24/02** *(2009.01)*
**H04W 36/22** *(2009.01)*     **H04W 36/30** *(2009.01)*

(21) Application number: **13305093.0**

(22) Date of filing: **28.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
- **Kuzminskiy, Alexandr**
  **Swindon, Wiltshire SN5 7DJ (GB)**
- **Yang, Jun**
  **Swindon, Wiltshire SN5 7DJ (GB)**

- **Wong, Shin Horng**
  **Swindon, Wiltshire SN5 7DJ (GB)**
- **Rao, Anil**
  **Naperville, IL 60563-1594 (US)**
- **BAKER, Matthew**
  **Westlea**
  **Swindon**
  **Wiltshire SN5 7dJ (GB)**

(74) Representative: **Leppard, Andrew John et al**
**Script IP Limited**
**Turnpike House**
**18 Bridge Street**
**Frome**
**Somerset BA11 1BB (GB)**

(54) **Network Node and Method to adjust user association in HetNets**

(57)     A network node method, a computer program product and a network node are disclosed. The network node method comprises: providing a first indication of a first cell performance and a second indication of a second cell performance; determining from the first and second indications whether the first cell performance differs from the second cell performance; and if the first cell performance differs from the second cell performance, then adjusting a bias for at least one of the first cell and the second cell to adjust a user equipment association with that cell. Accordingly, a decentralization bias adaption approach is provided by suggesting the bias for a cell based on its performance compared to another cell. This enables the bias to be set by each base station individually based on its comparative performance with other cells. This enables the bias to be adjusted dynamically, based on the actual performance of the cells under different operating conditions, without the need for a complicated and centralized control of user association. Instead, a base station typically only needs to be able to determine the performance of its cell compared to that of a cell of another base station in order to make an assessment of whether a bias adjustment for that cell is necessary.

Figure 1

**Description**

FIELD OF THE INVENTION

The present invention relates to a network node method, a computer program product and a network node.

BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within the macro cell. Such smaller sized cells are sometimes referred to as micro cells, femto cells and pico cells. A wireless telecommunications network comprised of different sized cells is known as a heterogeneous wireless telecommunications network. One way to establish such a small cell is to provide a small cell base station, such as a home cell or femto base station that provides coverage, having a relatively limited range, typically within the coverage area of a larger cell. The transmission power of a small cell base station is relatively low and, hence, each small cell provides a small coverage area compared with that of a macro cell and covers, for example, an office or a home.
Small cell base stations are typically intended to provide support for users belonging to a particular home or office. Accordingly, small cell base stations may be private access or may be public access. In a small cell base station that provides private access, access is registered only to registered users, for example family members or particular groups of employees. In small base stations which are public access, other users may use the small cell base station, typically subject to certain restrictions to protect the quality of service received by preferred users.
Such small cells are typically provided where the communications coverage provided by the overlying macro cell is poor or where a user wishes to use an alternative communications link provided locally, by the small cell base station, to communicate with the core network. Such a situation might arise where, for example, a user has a pre-existing communications link and the user wishes to use that link in preference to that provided by the macro cell network provider to communicate with the core network. These small cells, therefore, provide superior cellular coverage in residential, enterprise or hot-spot outdoor environments.
In a typical small cell base station, a broadband Internet protocol connection is used as "back haul" for connecting to the core network.
Although providing heterogeneous networks can provide performance improvements, such networks can also cause unexpected consequences. Accordingly, it is desired to provide an improved technique for use in heterogeneous networks.

SUMMARY

According to a first aspect, there is provided a network node method, comprising: providing a first indication of a first cell performance and a second indication of a second cell performance; determining from the first and second indications whether the first cell performance differs from the second cell performance; and if the first cell performance differs from the second cell performance, then adjusting a bias for at least one of the first cell and the second cell to adjust a user equipment association with that cell. The first aspect recognizes that the efficiency of the heterogeneous network may be limited because of the low coverage area of the lower power small cells, particularly in areas with strong macro cell coverage. The first aspect also recognizes that although range expansion of small cells is possible to balance the loading between a macro cell and small cells by biasing handover decisions between the different so that the user equipment is handed over to small cells earlier than usual, this present difficulties since only relatively low bias values may be employed with limited gain, as large bias values would lead to low signal-to-interference-plus-noise-ratios [SINR or EcIo] and control channel performance would be severely impacted. Although time-frequency resource partitioning can alleviate this, this is not well-suited to asynchronous WCDMA networks. Another difficulty of bias selection is that the impact of bias depends not only on small cell location in the macro cell, but also on non-uniform user equipment distribution. This means that a fixed range expansion may lose its efficiency in practical time-varying conditions. Although optimization is possible, this is typically based on maximizing the sum of logarithms of user SINR divided by the number of users associated with the corresponding base station. Although this can potentially be used for optimizing user equipment association including bias optimization, it is applied only for optimizing a single bias value for all small cells in an area. Also, these approaches assume centralized control of the user association, which may limit their utility. In addition, the implementation may require significant overhead information exchange between network elements and complicated optimization algorithms. Also, implementation of centralised solutions may be unrealistic where base stations are provided by different network providers and/ or network operators.
Accordingly, a method is provided. The method may comprise the step of providing a first indication of a first cell performance. The method may also comprise the step of providing a second indication of a second cell performance. The method may comprise the step of determining, from the first indication and the second indication, whether the first cell performance differs from the second cell performance. The method may also comprise the step of, if it is determined that the first cell performance differs from the second cell performance, then a bias for the first cell, the second cell or both is adjusted to adjust a user equipment association with those cells. Accordingly, a decentralization bias adaption approach is provided by suggesting the bias for a cell based on its performance compared to another cell. This enables the bias to be set by each base station individually based on its comparative performance with other cells. This enables the bias to be adjusted dynamically, based on the actual performance of the cells under different operating conditions, without the need for a complicated and centralized control of user association. Instead, a base station typically only needs to be able to determine the performance of its cell compared to that of a cell of another base station in order to make an assessment of whether a bias adjustment for that cell is necessary.

In one embodiment, the step of determining comprises determining whether the first cell performance exceeds the second cell performance and, if so, the step of adjusting comprises increasing the bias for the second cell to increase user equipment association with the second cell. Accordingly, when the performance of the first cell exceeds that of the second cell, the bias for the second cell is increased in order that the user equipment association with second cell is also increased. This helps to bias handover decisions to the second cell earlier than would otherwise occur since the second cell is operating with a reduced performance compared to that of the first cell and so is likely to have additional capacity to take on user equipment. That is to say that when the first cell is being operated with higher performance levels than the second cell, which indicates that the second cell is being operated at a lower level than the first cell, the bias for the second cell is increased to increase the user equipment being supported by the second cell in order to operate the second cell at a higher performance level.

In one embodiment, the step of determining comprises determining whether the second cell performance exceeds the first cell performance and, if so, the step of adjusting comprises decreasing the bias for the second cell to decrease user equipment association with the second cell. Accordingly, when it is determined that the performance of the second cell exceeds that of the first cell then the bias of the second cell is decreased in order to decrease the user equipment association with the second cell. This helps to bias the handover decision of user equipment away from the second cell when its performance already exceeds that of the first cell. That is to say that when the first cell is being operated at lower performance levels than the second cell, which indicates that the second cell is being operated at a higher level than the first cell, the bias for the second cell is decreased to decrease the user equipment being supported by the second cell in order to operate the second cell at a lower performance level.

In one embodiment, the step of determining comprises determining whether the first cell performance differs from the second cell performance by at least one threshold amount. By specifying a threshold amount, a significant difference in performance needs to occur before any changes are made to the bias in order to improve network stability and to prevent unnecessary, minor changes. It will be appreciated that both a positive and negative threshold amount may be specified.

In one embodiment, the step of determining comprises determining that a difference between the first cell performance and the second cell throughput is within the threshold amount and, if so, the step of adjusting comprises maintaining the bias for the second cell to maintain the user equipment association with the second cell. Accordingly, when the difference between the first and second cell performance fails to exceed the threshold amount, the bias is unchanged. Again, this helps to improve network stability and reduce unnecessary reconfigurations.

In one embodiment, the step of adjusting comprises:

$$\delta_m^n = \begin{cases} \nabla, \text{if } \dfrac{Q_m^n}{Q_0^n} > \gamma_{\max}, \text{or } K_m^n = 0 \\ 0, \text{if } \gamma_{\min} \leq \dfrac{Q_m^n}{Q_0^n} \leq \gamma_{\max} \\ -\nabla, \text{if } \dfrac{Q_m^n}{Q_0^n} < \gamma_{\min} \end{cases}, \ m = 1,\ldots,M,$$

where $\delta_m^n$ is a step size for an $m$ th second base station at an $n$ th iteration of adaptation, $\nabla > 0$ is a step size value, $\gamma_{\min}$ and $\gamma_{\max}$ are threshold parameters, $Q_0^n$ is the first performance indicator for the first base station at the $n$ th iteration, $Q_m^n$ is the second performance indicator for the $m$ th second base station at the $n$ th iteration, and $M$ is the number of second base stations in the first base station coverage area.

In one embodiment, the method comprises the step of limiting the bias adjustment to ensure that the bias remains between upper and lower values. Limiting the bias such that it remains within a bias range ensures that realistic SINR values are maintained.

In one embodiment, the step of limiting comprises:

$$b_m^{n+1} = \begin{cases} b_m^{\max}, \text{if } \tilde{b}_m^{n+1} > b_m^{\max} \\ \tilde{b}_m^{n+1}, \text{if } b_m^{\min} \leq \tilde{b}_m^{n+1} \leq b_m^{\max} \\ b_m^{\min}, \text{if } \tilde{b}_m^{n+1} < b_m^{\min} \end{cases},$$

where $b_m^{\min}$ and $b_m^{\max}$ are minimum and maximum bias values for the $m$ th second base station.

In one embodiment, comprising the step of causing user equipment to adjust their association in accordance with:

$$\text{ID}_k^{n+1} = \begin{cases} \overline{\text{ID}_k}^{n+1}, \text{if } \mathbf{u}_k^{n+1}(\overline{\text{ID}_k}^{n+1}) \geq \mathbf{u}_k^{n+1}(\text{ID}_k^n) + \beta \\ \text{ID}_k^n, \text{if } \mathbf{u}_k^{n+1}(\overline{\text{ID}_k}^{n+1}) < \mathbf{u}_k^{n+1}(\text{ID}_k^n) + \beta \end{cases},$$

where $\text{ID}_k^n \in [1, M+1]$ is a user equipment association corresponding to its position in an association selection vector $\mathbf{u}_k^n = [\rho_{k0}^n, \rho_{k1}^n + b_1^n, \ldots, \rho_{kM}^n + b_M^n]$ for a $k$th user equipment at the $n$ th iteration, $\rho_{k0}^n$ and $\rho_{km}^n$, $m$=1,...,$M$ are Eclo values for the $k$ th user equipment at the $n$ th iteration from the first and second base station correspondingly, $\overline{\text{ID}_k}^{n+1} = \arg\max(\mathbf{u}_k^n)$ is the position of a maximum element in the selection vector, β ≥ 0 is a handover hysteresis threshold.

In one embodiment, the first and second indications comprises at least one of an indication of throughput, a cell-edge throughput, a low percentile of throughput, a channel quality, a low percentile of signal to interference ratio and a load level. It will be appreciated that the indications may be key performance indicators which may comprise, for example, an indication of cell-edge throughput, such as the Xth percentile throughput, the Xth percentile Eclo value reported by the user equipment and the number of associated user equipment, the Xth percentile CQI value reported by the user equipment and number of associated user equipment, any of the above for a subset of user equipment such as, for example, user equipment with a given service, user equipment with data or served user equipment. In addition, the indicator may be a low level which may be an absolute level, a relative level, a quantized indication of, or an indication of the amount of spare capacity.

In one embodiment, the first cell is provided by a macro base station and the second cell is provided by at least one small cell base station located within the first cell, the network node comprises the small cell base station and the step of providing comprises providing the first indication from the macro base station to the small cell base station. Accordingly, the indication may be provided from the macro base station to the small cell base station to enable the small cell base station to determine whether to adjust a bias level for the small cell in order to adjust the user equipment association with that small cell. Accordingly, each small cell may individually update it bias based simply on its performance comparison with the macro cell.

In one embodiment, the first cell is provided by a macro base station and the second cell is provided by at least one small cell base station located within the first cell, the network node comprises the macro base station and the step of providing comprises providing the first indication from the small cell base station to the macro base station. Accordingly, the indication may be provided from the small cell base station to the macro base station to enable the macro base station to determine whether to adjust a bias level for the small cell in order to adjust the user equipment association with that small cell. Accordingly, each small cell may have its bias individually updated based simply on its performance comparison with the macro cell.

In one embodiment, the first cell is provided by a macro base station and the second cell is provided by at least one small cell base station located within the first cell, the network node comprises a network controller and the step of providing comprises providing the indications to the network controller. Accordingly, the indications may be provided to the network controller to enable the network controller to determine whether to adjust a bias level for the small cell in order to adjust the user equipment association with that small cell. Accordingly, each small cell may have its bias individually updated based simply on its performance comparison with the macro cell.

In one embodiment, the method comprises the step of providing the bias for collation with other bias for other small cell base stations by at least one of the macro base station and a network controller for transmission to user equipment within the macro cell. Accordingly, the bias may be provided in order that this may be collated with other biases by either the macro base station or a network controller in order that the biases for each small cell base station may be transmitted to user equipment within the macro cell.

In one embodiment, the first indication is provided to said macro base station, said macro base station calculates the bias and sends the bias to a network controller such as, for example, a radio network controller, the radio network controller sends the bias update to the user via radio resource connection messages or some other means of broadcast.

In one embodiment, the indications are provided to a radio network controller, the radio network controller performs calculation and determine the bias, the bias sent to user equipment via radio resource connection messages.

In one embodiment, the first indication is provided to said small cell base station, said small cell base stations calculates and either a) sends a bias update to the radio network controller, in which the radio network controller updates user equipment via radio resource connection messages or b) sends a bias update to the macro base station, the macro base station updates the user equipment via HS-SCCH orders.

In one embodiment, the method comprises the step of transmitting the bias to user equipment within the macro cell to cause the user equipment to update their association.

According to a second aspect, there is provided a computer program product operable, when executed on a computer, to perform the method steps of the first aspect.

According to a third aspect, there is provided a network node, comprising: logic operable to provide a first indication of a first cell performance and a second indication of a second cell performance; determining logic operable to determine from the first and second indications whether the first cell performance differs from the second cell performance; and adjustment logic operable, if the first cell performance differs from the second cell performance, to adjust a bias for at least one of the first cell and the second cell to adjust a user equipment association with that cell.

In one embodiment, the determining logic is operable to determine whether the first cell performance exceeds the second cell performance and, if so, the adjustment logic is operable to increase the bias for the second cell to increase user equipment association with the second cell.

In one embodiment, the determining logic is operable to determine whether the second cell performance exceeds the first cell performance and, if so, the adjustment logic is operable to decrease the bias for the second cell to decrease user equipment association with the second cell.

In one embodiment, the determining logic is operable to determine whether the first cell performance differs from the second cell performance by at least one threshold amount.

In one embodiment, the determining logic is operable to determine whether a difference between the first cell performance and the second cell throughput is within the threshold amount and, if so, the adjustment logic is operable to maintain the bias for the second cell to maintain the user equipment association with the second cell.

In one embodiment, the adjustment logic functions in accordance with:

$$\delta_m^n = \begin{cases} \nabla, \text{if } \dfrac{Q_m^n}{Q_0^n} > \gamma_{\max}, \text{ or } K_m^n = 0 \\ 0, \text{if } \gamma_{\min} \le \dfrac{Q_m^n}{Q_0^n} \le \gamma_{\max} \\ -\nabla, \text{if } \dfrac{Q_m^n}{Q_0^n} < \gamma_{\min} \end{cases} , \ m = 1, \ldots, M,$$

where $\delta_m^n$ is a step size for an $m$ th second base station at an $n$ th iteration of adaptation, $\nabla > 0$ is a step size value, $\gamma_{\min}$ and $\gamma_{\max}$ are threshold parameters, $Q_0^n$ is the first performance indicator for the first base station at the $n$ th iteration, $Q_m^n$ is the second performance indicator for the $m$ th second base station at the $n$ th iteration, and $M$ is the number of second base stations in the first base station coverage area.

In one embodiment, the network node comprises a limiter operable to limit the bias adjustment to ensure that the bias remains between upper and lower values.

5

In one embodiment, the limiter functions in accordance with:

$$b_m^{n+1} = \begin{cases} b_m^{\max}, \text{if } \tilde{b}_m^{n+1} > b_m^{\max} \\ \tilde{b}_m^{n+1}, \text{if } b_m^{\min} \leq \tilde{b}_m^{n+1} \leq b_m^{\max}, \\ b_m^{\min}, \text{if } \tilde{b}_m^{n+1} < b_m^{\min} \end{cases}$$

where $b_m^{\min}$ and $b_m^{\max}$ are minimum and maximum bias values for the $m$ th second base station.

In one embodiment, the network node comprises association logic operable to cause user equipment to adjust their association in accordance with

$$\mathrm{ID}_k^{n+1} = \begin{cases} \overline{\mathrm{ID}_k}^{n+1}, \text{if } \mathbf{u}_k^{n+1}(\overline{\mathrm{ID}_k}^{n+1}) \geq \mathbf{u}_k^{n+1}(\mathrm{ID}_k^n) + \beta \\ \mathrm{ID}_k^n, \text{if } \mathbf{u}_k^{n+1}(\overline{\mathrm{ID}_k}^{n+1}) < \mathbf{u}_k^{n+1}(\mathrm{ID}_k^n) + \beta \end{cases},$$

where $\mathrm{ID}_k^n \in [1, M+1]$ is a user equipment association corresponding to its position in an association selection vector $\mathbf{u}_k^n = [\rho_{k0}^n, \rho_{k1}^n + b_1^n, \ldots, \rho_{kM}^n + b_M^n]$ for a $k$ th user equipment at the $n$ th iteration, $\rho_{k0}^n$ and $\rho_{km}^n$, $m$=1,...,$M$ are Eclo values for the $k$ th user equipment at the $n$ th iteration from the first and second base station correspondingly, $\overline{\mathrm{ID}_k}^{n+1} = \arg\max(\mathbf{u}_k^n)$ is the position of a maximum element in the selection vector, $\beta \geq 0$ is a handover hysteresis threshold.

In one embodiment, the first and second indications comprises at least one of an indication of, throughput, a cell-edge throughput and a load level.

In one embodiment, the first cell is provided by a macro base station and the second cell is provided by at least one small cell base station located within the first cell, the network node comprises the small cell base station and the logic is operable to provide the first indication from the macro base station to the small cell base station.

In one embodiment, the network node comprises provision logic operable to provide the bias for collation with other bias for other small cell base stations by at least one of the macro base station and a network controller for transmission to user equipment within the macro cell.

In one embodiment, the network node comprises transmission logic operable to transmit the bias to user equipment within the macro cell to cause the user equipment to update their association.

According to a fourth aspect, there is provided a network node method, comprising: providing a first indication of a cell edge performance characteristic of a cell controlled by a first network node from the first network node to a second network node.

In one embodiment, the first indication comprises at least one of: an indication of received CQI values, an indication of cell-edge throughputs, a low percentile of received CQI values, or a low percentile of per-user throughputs.

In one embodiment, the method comprises comparing the providing a first indication of a first cell performance and with a second indication of a second cell performance; determining from the first and second indications whether the first cell performance differs from the second cell performance; and if the first cell performance differs from the second cell performance, then adjusting a bias for at least one of the first cell and the second cell to adjust a user equipment association with that cell.

Embodiments of the fourth aspect comprise the additional embodiments of the first aspect.

According to a fifth aspect, there is provided a network node, comprising: logic operable to provide a first indication of a cell edge performance characteristic of a cell controlled by a first network node from the first network node to a second network node.

In one embodiment, the first indication comprises at least one of: an indication of received CQI values, an indication of cell-edge throughputs, a low percentile of received CQI values, or a low percentile of per-user throughputs.

In one embodiment, the logic is operable to provide a first indication of a first cell performance and with a second indication of a second cell performance, to determine from the first and second indications whether the first cell performance differs from the second cell performance and, if the first cell performance differs from the second cell performance, to adjust a bias for at least one of the first cell and the second cell to adjust a user equipment association with that cell.

Embodiments of the fifth aspect comprise the additional embodiments of the second aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates information flow between base stations when performing bias control according to one embodiment;
Figure 2 illustrates a bias controller of a small cell base station in more detail;
Figure 3 illustrates information flow between base stations and a controller when performing bias control according to one embodiment; and
Figures 4 to 9 illustrate simulations results according to embodiments.

DESCRIPTION OF THE EMBODIMENTS

Overview

Before discussing the embodiments in any more detail, first an overview will be provided. Embodiments provide a technique where signalling is introduced to support a decentralized bias adaption scheme by signalling a key performance indicator (KPI) from one base station to another base station or to a radio network controller. In particular, embodiments provide an arrangement where a performance indicator is provided from one base station supporting one cell to another base station supporting another cell. The base station which receives the performance indicator may compare this with its own performance indicator for its cell in order to establish the relative performance of its cell compared to the other cell. When the performance of the two cells differs sufficiently, a bias value may be adjusted in order to change a user association with that cell in order to encourage or discourage handover between the cells. This provides a decentralized approach where individual base stations can influence the user equipment association with the cells that they support without the need for complex signalling or centralized optimization in order to change the loading between the different cells. Instead, the loading can be varied dynamically based on the comparative performance being experienced by the different cells. This helps to improve performance, particularly in networks where base stations are provided by different providers or network operators.

Biasing Control - Distributed Embodiment

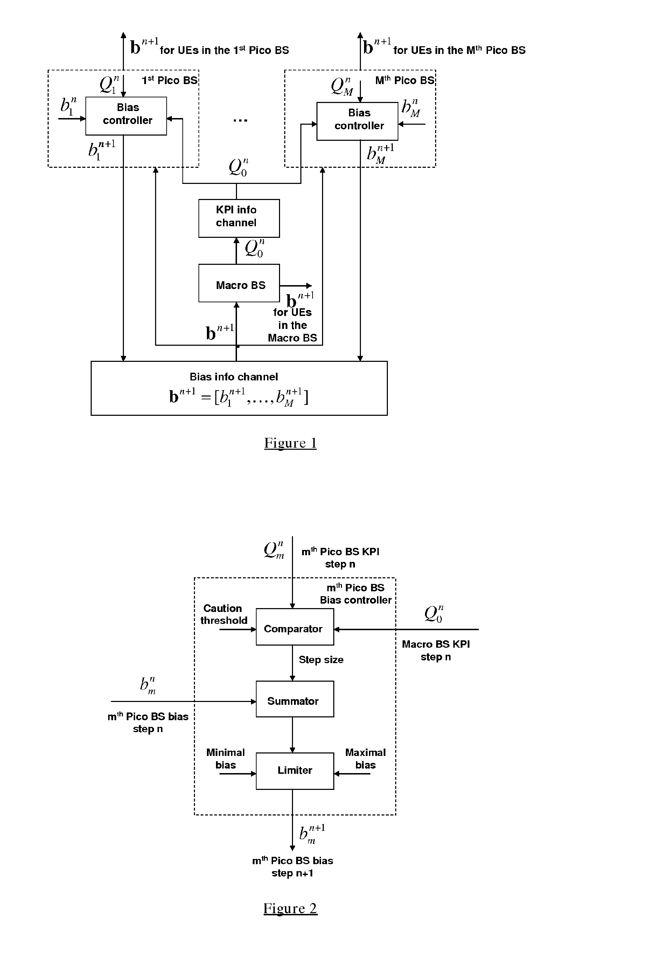

As can be seen in Figure 1, a macro base station informs all small cell base stations in its coverage area (i.e. within the macro cell) of its current key performance indicator (KPI). Then, each small cell base station compares its own current KPI with the macro base station KPI and adjusts its own preferred bias value to increase or decrease the user equipment offload to that small cell. The macro base station uses a KPI information channel to inform small cell base stations in its coverage area of its current KPI such as, for example, cell edge throughput.

Bias Controller

As can be seen in Figure 2, each small cell base station estimates its own KPI and compares it with the macro base station KPI by means of a comparator in a bias controller. Depending on the value of a caution threshold parameter, the comparator generates: a) a positive step size if the given small cell base station can accept more user equipment; b) a negative step size if the small cell base station is already overloaded, or c) a zero step size if the situation is not certain. Then, the current bias value of the given small cell base station is updated in a summator and, after limitation according to minimum and maximum bounds in a limiter, is sent to a bias information channel. The bias information channel collects the updated bias values from all small cell base stations in the coverage area of the macro base station and sends this information to the corresponding macro base station. Thereafter, the macro base station informs its user equipment of the new bias values for the small cells to allow them to update their user association rules. The approach can be applied in single or dual (multi) carrier heterogeneous networks. For example, in a soft reuse configuration, the high power macro base stations inform the heterogeneous networks of its KPI and the low power macro base station is considered similarly to small cell base stations.

Biasing Control - Centralised Embodiment

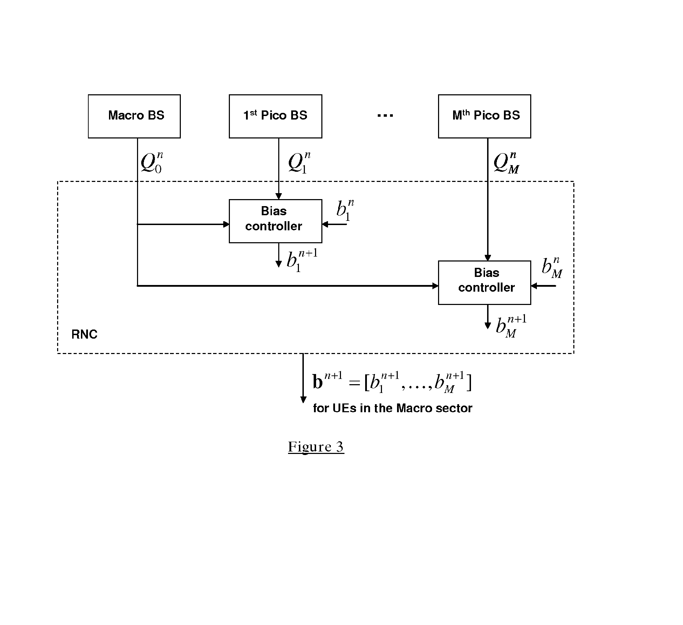

As can be seen in Figure 3, each small cell base station signals its KPI to the macro base station or, in this example, to a radio network controller (RNC). In this embodiment, it is not necessary for the macro base station to provide its KPI to the small cell base stations. The macro base station or the RNC then determines a suitable bias value for each small cell and signals the bias value for each small cell to the user equipment. The step of determining the suitable bias value for a small cell base station may take into account the KPI value signalled by the small cell base station, and/or other information such as a KPI of the macro base station, the load level of the macro base station, or the load level of the small cell base station.

A small cell base station may additionally signal its load level to the macro base station or the RNC. The signalled value of load level may be an absolute load level, a relative load level, a quantised indication of load level (for example, "fully loaded" or "not fully loaded"), or an indication of the amount of spare capacity.

Key Performance Indicator

In any of the above embodiments, the KPI may comprise:

- an indication of cell-edge throughput, such as:

    o the xth percentile throughput
    o the xth percentile EcIo value reported by the user equipment and number of the associated user equipment
    o the xth percentile CQI value reported by the user equipment and number of the associated user equipment
    o any of the above for a subset of the user equipment, e.g.:

        ■ user equipment with a given service (e.g. voice), or
        ■ user equipment with data, or
        ■ served user equipment.

Particularly, the underplaying reason for the second KPI above is the assumption that the user equipment throughput typically may be approximately proportional to the EcIo value and backward proportional to the number of user equipment associated with the corresponding macro or small cell base station.

Example Implementation

In an example implementation, the macro and small cell base stations are conventional UMTS base stations. The macro and small cell base stations use the downlink cell edge throughput as the KPI. It can be estimated as the 5% point of the cumulative distribution function (CDF) calculated over all user equipment associated with corresponding base stations. The long term downlink throughput can be defined simply as the scheduled transport block size for the user equipment and the base station would need to keep track of this using a conventional low-pass filter.

The KPI information channel can be implemented sending the macro cell edge throughput ( $Q_0^n$ in Fig. 1) to the RNC. Then, RNC can broadcast this information to the relevant small cell base stations. The corresponding messages from the macro base station to the RNC and from the RNC to the small cell base stations need standard modifications.

Comparator

The comparator in the bias controller can be implemented as follows:

$$\delta_m^n = \begin{cases} \nabla, \text{if } \dfrac{Q_m^n}{Q_0^n} > \gamma_{\max}, \text{or } K_m^n = 0 \\ 0, \text{if } \gamma_{\min} \le \dfrac{Q_m^n}{Q_0^n} \le \gamma_{\max} \\ -\nabla, \text{if } \dfrac{Q_m^n}{Q_0^n} < \gamma_{\min} \end{cases}, \quad m = 1, \ldots, M, \qquad \text{(Equation 1)}$$

where $\delta_m^n$ is the step size (in dB) for the $m$ th small cell base station at the $n$ th iteration of adaptation, $\nabla > 0$ is the step size value, $\gamma_{\min}$ and $\gamma_{\max}$ are the caution threshold parameters, $Q_0^n$ is the KPI estimate for the macro base station at the $n$ th iteration, $Q_m^n$ is the KPI estimate for the $m$ th small cell base station at the $n$ th iteration, and $M$ is the number of small cell base stations in the macro base station coverage area.

Summator

The summator in the bias controller can be implemented as follows:

$$\tilde{b}_m^{n+1} = b_m^n + \delta_m^n, \qquad \text{(Equation 2)}$$

where $\tilde{b}_m^{n+1}$ is the unrestricted bias value for the $m$ th Pico BS at the $(n+1)$th iteration.

Limiter

The Limiter in the bias controller can be implemented as follows:

$$b_m^{n+1} = \begin{cases} b_m^{\max}, \text{if } \tilde{b}_m^{n+1} > b_m^{\max} \\ \tilde{b}_m^{n+1}, \text{if } b_m^{\min} \le \tilde{b}_m^{n+1} \le b_m^{\max} \\ b_m^{\min}, \text{if } \tilde{b}_m^{n+1} < b_m^{\min} \end{cases}, \qquad \text{(Equation 3)}$$

where $b_m^{\min}$ and $b_m^{\max}$ are the minimum and maximum bias values for the $m$ th small cell base station, which restrict the bias range, for example to avoid possibility of association with very low Eclo user equipment.

The bias information channel collects the updated bias values for all $M$ small cell base stations, forms the $M$-dimension bias vector $\mathbf{b}^{n+1} = [b_1^{n+1}, \ldots, b_M^{n+1}]$, and sends it to all base stations in the macro cell coverage area. The bias information channel can be implemented at the RNC. The corresponding messages from the small cell base station to the RNC and from the RNC to the macro and small cell base stations need standard modifications.

The macro and small cell base stations send the updated bias vector to the user equipment that they are currently associated with. The updated bias vector can be sent to the user equipment using, for example, a Measurement Control Message or during an Active Set Update. It is also possible to send this information from the base station (LPN and Macro) to the user equipment via an HS-SCCH order.

Association Update

The user equipment update their association according to the following association rule:

$$ID_k^{n+1} = \begin{cases} \overline{ID}_k^{n+1}, \text{if } \mathbf{u}_k^{n+1}(\overline{ID}_k^{n+1}) \geq \mathbf{u}_k^{n+1}(ID_k^n) + \beta \\ ID_k^n, \text{if } \mathbf{u}_k^{n+1}(\overline{ID}_k^{n+1}) < \mathbf{u}_k^{n+1}(ID_k^n) + \beta \end{cases}, \qquad \text{(Equation 4)}$$

where $ID_k^n \in [1, M+1]$ is the user equipment identification (association) corresponding to its position in the association selection vector $\mathbf{u}_k^n = [\rho_{k0}^n, \rho_{k1}^n + b_1^n, \ldots, \rho_{kM}^n + b_M^n]$ for the $k$ th user equipment at the $n$ th iteration, $\rho_{k0}^n$ and $\rho_{km}^n$, $m$=1,...,$M$ are the Eclo values (in dB) for the $k$ th user equipment at the $n$ th iteration from the macro and low power base station correspondingly, $\overline{ID}_k^{n+1} = \arg \max(\mathbf{u}_k^n)$ is the position of the maximum element in the selection vector, $\beta \geq 0$ is the handover hysteresis threshold (in dB) defined in [6].

As suggested above, another implementation can use the Eclo based KPI as follows:

$$Q_0^n = \frac{\tilde{\rho}_0^n}{N_0^n}, \; Q_m^n = \frac{\tilde{\rho}_m^n}{N_m^n}, \; m = 1, \ldots, M , \qquad \text{(Equation 5)}$$

where $\tilde{\rho}_0^n$ and $\tilde{\rho}_m^n$ are the 5% points of the Eclo CDFs of the $N_0^n$ and $N_m^n$ user equipment associated with the macro and the $m$ th small cell base station at the $n$ th iteration correspondingly.

Taking into account that the RNC may be involved in implementation of the KPI information channel and the bias information channel in Figure 1, decentralized bias updates also can be implemented at the RNC as illustrated in Figure 3.

Although the approach shown in Figure 3 may seem like a centralized one in terms of communications between different network elements, it will be appreciated that is still essentially decentralized in terms of bias adaptation. In particular, that approach does not need an external utility function, or a pre-calculated data base, as well as complicated numerical optimization algorithms.

Simulation Results

Particular values for the system parameters are specified in the following simulation example. Simulation scenario:

- 2 carriers of 5 MHz band
- 7 hexagonal Macro sectors with 4 randomly placed small (Pico) cells per carrier
- Pathloss models: L=128.1+37.6log10(R) (Macro), L=140.7+36.7log10(R) (Pico)
- 3GPP horizontal and vertical Macro antenna patterns
- 17 dB and 8dB Macro and Pico antenna gain, 3dB cable loss
- 43dBm transmit power for Macro base station (BS) in carrier 1
- 30dBm transmit power for Macro BS in carrier 2, and Pico cell BSs in both carriers,
- 10 % pilot power
- 100dBm noise power
- 500m inter site distance
- Full buffer traffic model
- Type 2 (one receive antenna at user equipment (UEs)) and Type 3 (two receive antennas at UEs)
- Pico cell BS and UE dropping according to Configuration 4b [8] for all UEs. Particularly, totally 60 UEs per each carrier are allocated in a Macro-sector, including 20 uniformly distributed UEs and 10 UEs uniformly distributed around each Pico BS with 40m radius
- Min distance: 75m PicoBS-MacroBS, 40m PicoBS-PicoBS, 35m UE-MacroBS, 10m UE-PicoBS
- No mobility assumed.

The total number of low power BSs per Macro sector is $M$ = 9 (4 Pico BSs in each carrier plus one low power Macro BS in carrier 2). So, the dimension the UE association selection vector is 10. The implementation parameters are as follows: ∇=0.2dB, $\gamma_{min}$ = 0.75 , $\gamma_{max}$ = 1.5, β = 1dB, $b_m^{\min} = 0\,\mathrm{dB}$ for all 9 low power BSs, $b_m^{\max} = 3\,\mathrm{dB}$ for all 4 low power nodes in carrier 1, and $b_m^{\max} = 2\,\mathrm{dB}$ in all 5 low power BSs in carrier 2. Type 2 receiver is assumed for all UEs.

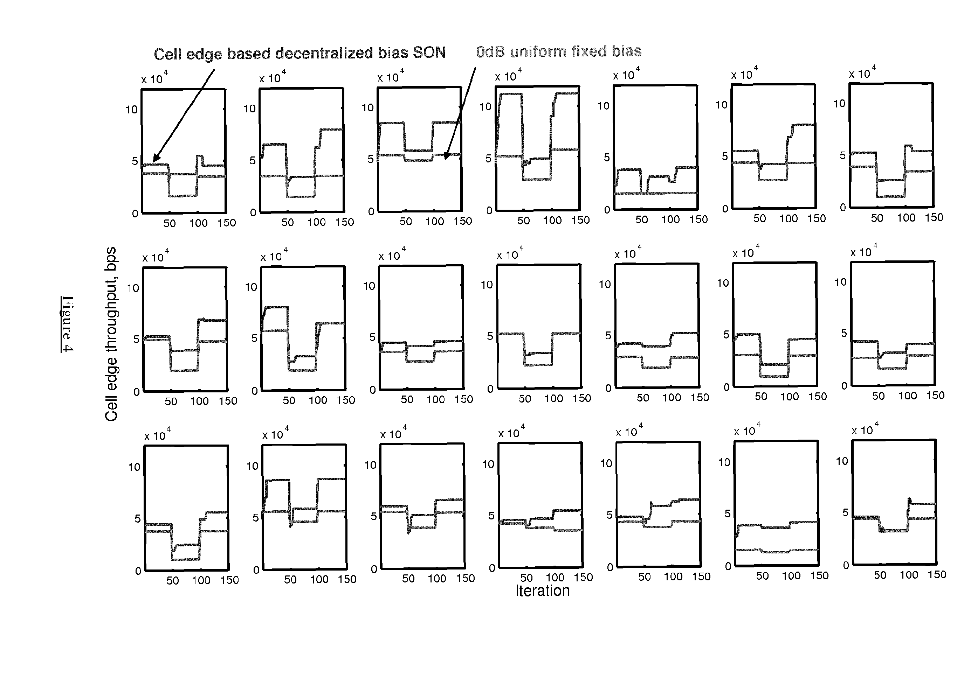

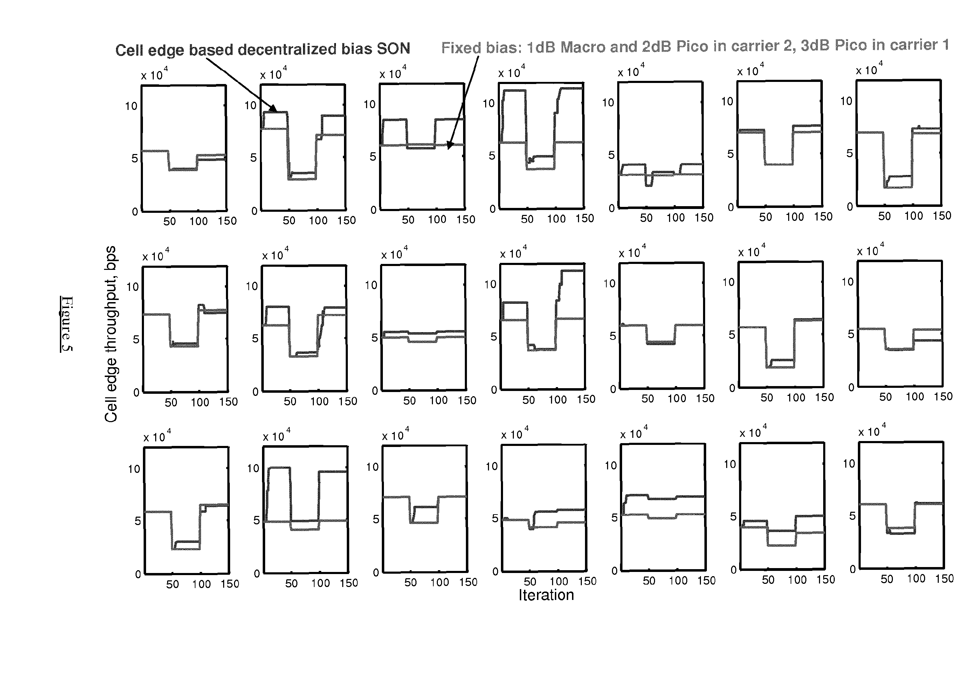

The typical simulation results in 21 Macro sectors are shown in Figures 4 and 5. The overall (Macro plus Pico in both carriers) cell edge throughput is plotted in 21 Macro sector coverage areas for the fixed (green curves) and adaptive (blue curves) bias values. In both scenarios, all Pico BSs are active for the first 50 iterations, then one randomly selected Pico BS is disabled in both carriers for the next 50 iterations, and all Pico BSs are active again for the last 50 iterations.

The zero bias is assumed for all low power nodes as the fixed bias and initialization for the adaptive solution in Figure 4.

It can be seen that the embodiment significantly outperforms the no range expansion case in all cells and quickly adapts to the changing network configuration.

The quasi uniform bias values (3 dB for all Pico BSs in carrier 1, 2 dB for all Pico BSs in carrier 2 and 1 dB for Macro BS in carrier 2) especially optimized for the simulated scenario are used for the fixed bias configuration and as initialization for the decentralized bias selection in Figure 5. It can be seen that the embodiment still outperforms the non-adaptive one in most of the cells.

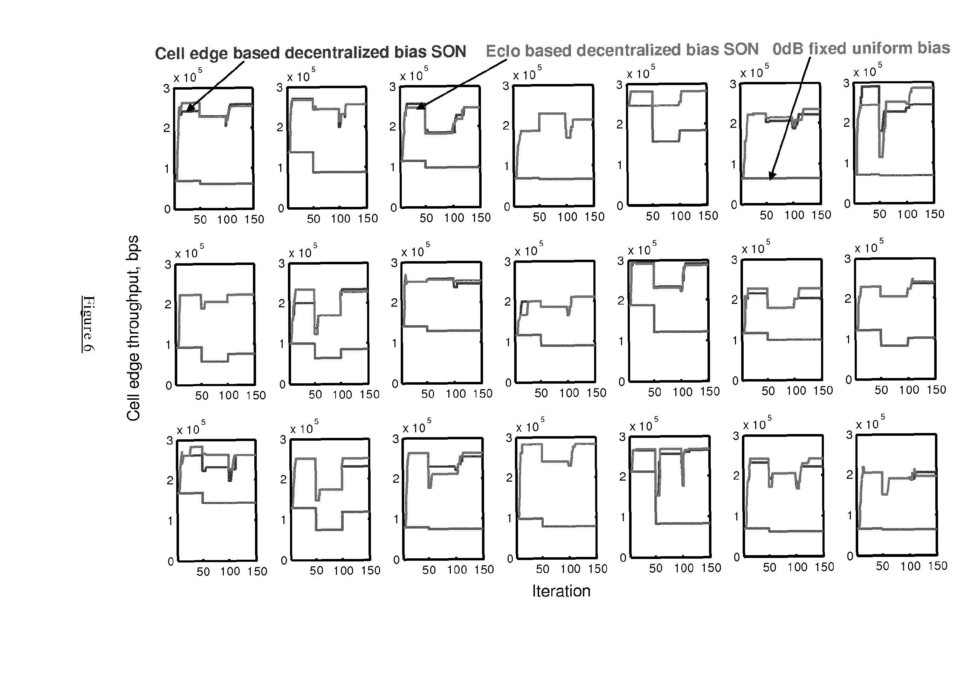

Applicability of the embodiment in different network configurations is additionally illustrated in Figures 6 to 9, which present the simulation results in the dedicated carrier HetNet scenario. A full 43dBm power Macro BS and no Pico cells are assumed in carrier 1. On the contrary, no Macro BS and 4 Pico BSs are used in carrier 2. The simulation scenario is similar to the previous one, but with 30 UEs per Macro sector per carrier. The total number of Pico BSs per Macro sector is $M$ = 4. So, the dimension the UE association selection vector is 5. The implementation parameters are as follows: ∇ = 0.2dB, $\gamma_{min}$ = 0.75, $\gamma_{max}$ =1.5, β = 1dB, $b_m^{\min} = 0\,\mathrm{dB}$ and $b_m^{\max} = 3\,\mathrm{dB}$ for all 4 Pico. A type 3 receiver is assumed for all UEs. Both KPIs presented in the implementation section above are used: the cell edge throughput KPI and EcIo/N KPI.

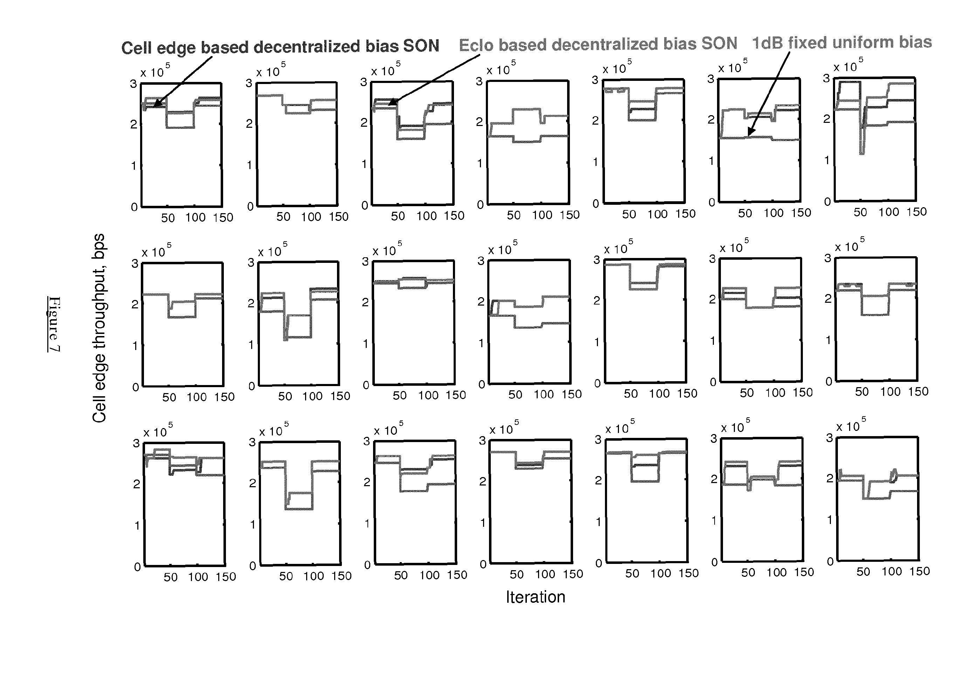

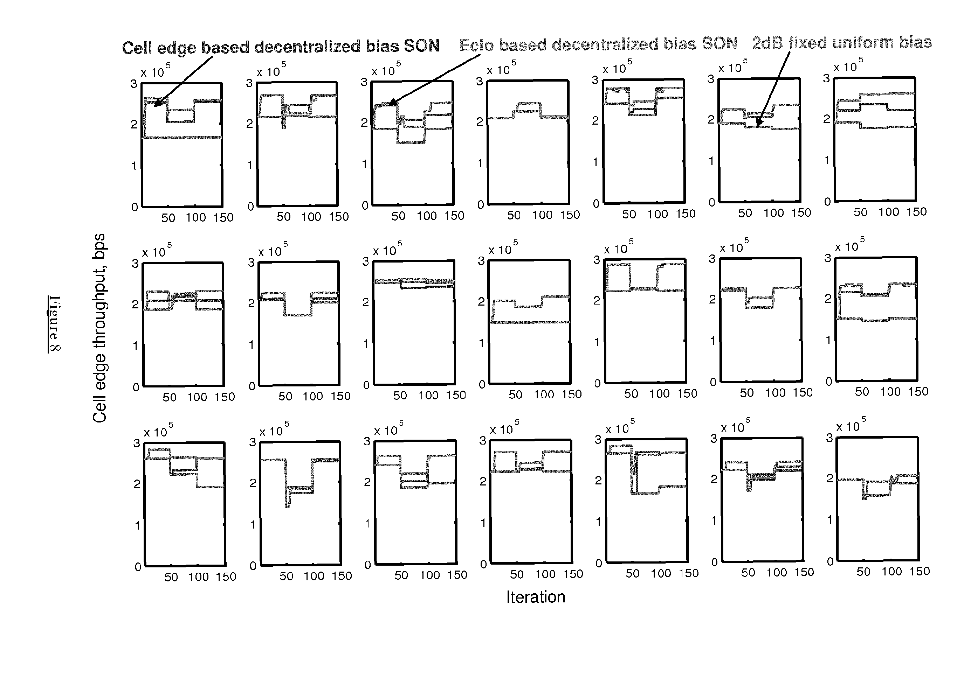

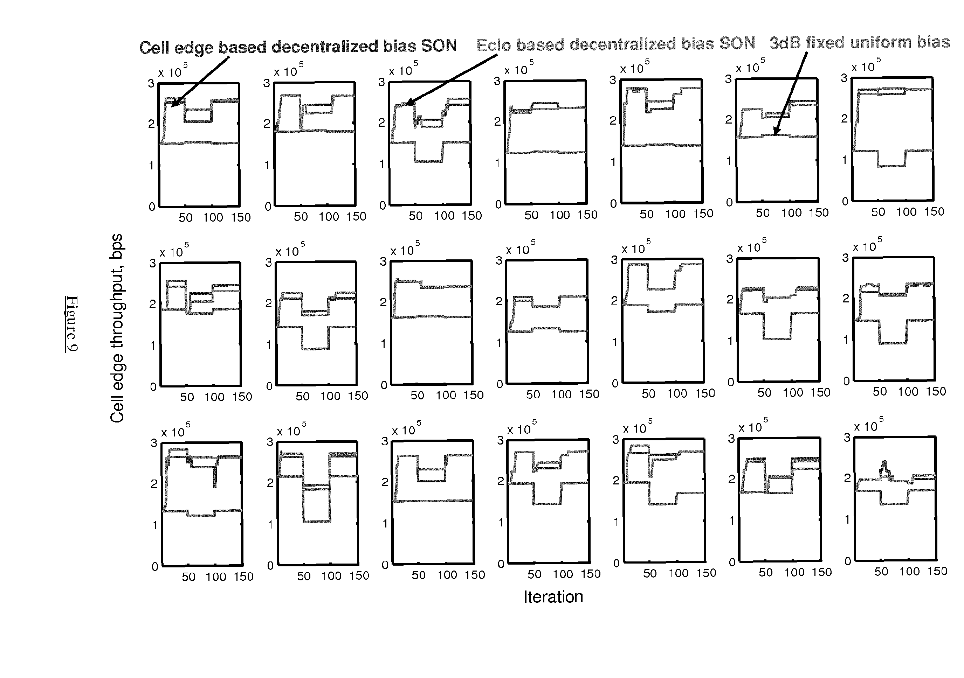

The uniform [0,1,2,3]dB bias is assumed for all Pico BSs as the fixed bias and initialization for the adaptive solution in Figures 6to 9 correspondingly. Again, it can be seen that the proposed solution significantly outperforms the fixed bias case, especially for 0dB and 3dB fixed bias values in Fig. 6 and 9, and quickly adapts to the changing network configuration for both KPIs used for decentralized bias adaptation. Also, the presented results show that simple optimization of the uniform fixed bias cannot be efficient in all scenarios. Particularly, it can be seen in Figure 7 that the 1dB fixed bias gives better results in sector 1 compared to the 2dB results in Figure 8, but the situation in sector 6 is the opposite. At the same time, the embodiment finds the best results in both scenarios independently on the initialization and for both proposed KPIs used for adaptation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer

EP 2 760 237 A1

or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A network node method, comprising:

   providing a first indication of a first cell performance and a second indication of a second cell performance;
   determining from said first and second indications whether said first cell performance differs from said second cell performance; and
   if said first cell performance differs from said second cell performance, then adjusting a bias for at least one of said first cell and said second cell to adjust a user equipment association with that cell.

2. The method of claim 1, wherein said step of determining comprises determining whether said first cell performance exceeds said second cell performance and, if so, said step of adjusting comprises increasing said bias for said second cell to increase user equipment association with said second cell.

3. The method of claim 1 or 2, wherein said step of determining comprises determining whether said second cell performance exceeds said first cell performance and, if so, said step of adjusting comprises decreasing said bias for said second cell to decrease user equipment association with said second cell.

4. The method of any preceding claim, wherein said step of determining comprises determining whether said first cell performance differs from said second cell performance by at least one threshold amount.

5. The method of any preceding claim, wherein said step of determining comprises determining that a difference between said first cell performance and said second cell throughput is within said threshold amount and, if so, said step of adjusting comprises maintaining said bias for said second cell to maintain said user equipment association with said second cell.

6. The method of any preceding claim, wherein said step of adjusting comprises:

$$\delta_m^n = \begin{cases} \nabla, \text{if } \dfrac{Q_m^n}{Q_0^n} > \gamma_{\max}, \text{or } K_m^n = 0 \\ 0, \text{if } \gamma_{\min} \leq \dfrac{Q_m^n}{Q_0^n} \leq \gamma_{\max} \\ -\nabla, \text{if } \dfrac{Q_m^n}{Q_0^n} < \gamma_{\min} \end{cases}, \quad m = 1, \ldots, M,$$

where $\delta_m^n$ is a step size for an $m$ th second base station at an $n$ th iteration of adaptation $\nabla > 0$ is a step size value, $\gamma_{\min}$ and $\gamma_{\max}$ are threshold parameters, $Q_0^n$ is said first performance indicator for said first base station at the $n$ th iteration, $Q_m^n$ is the second performance indicator for said $m$ th second base station at the $n$ th iteration, and $M$ is the number of second base stations in the first base station coverage area.

12

7. The method of any preceding claim, comprising the step of limiting said bias adjustment to ensure that said bias remains between upper and lower values.

8. The method of any preceding claim, wherein said step of limiting comprises:

$$b_m^{n+1} = \begin{cases} b_m^{\max}, \text{if } \tilde{b}_m^{n+1} > b_m^{\max} \\ \tilde{b}_m^{n+1}, \text{if } b_m^{\min} \leq \tilde{b}_m^{n+1} \leq b_m^{\max} \\ b_m^{\min}, \text{if } \tilde{b}_m^{n+1} < b_m^{\min} \end{cases},$$

where $b_m^{\min}$ and $b_m^{\max}$ are minimum and maximum bias values for the $m$ th second base station.

9. The method of any preceding claim, comprising the step of causing user equipment to adjust their association in accordance with:

$$\text{ID}_k^{n+1} = \begin{cases} \overline{\text{ID}}_k^{n+1}, \text{if } \mathbf{u}_k^{n+1}(\overline{\text{ID}}_k^{n+1}) \geq \mathbf{u}_k^{n+1}(\text{ID}_k^{n}) + \beta \\ \text{ID}_k^{n}, \text{if } \mathbf{u}_k^{n+1}(\overline{\text{ID}}_k^{n+1}) < \mathbf{u}_k^{n+1}(\text{ID}_k^{n}) + \beta \end{cases},$$

where $\text{ID}_k^n \in [1, M+1]$ is a user equipment association corresponding to its position in an association selection vector $\mathbf{u}_k^n = [\rho_{k0}^n, \rho_{k1}^n + b_1^n, \dots, \rho_{kM}^n + b_M^n]$ for a $k$ th user equipment at the $n$ th iteration, $\rho_{k0}^n$ and $\rho_{km}^n$, $m$=1,...,$M$ are Eclo values for said $k$ th user equipment at the $n$ th iteration from the first and second base station correspondingly, $\overline{\text{ID}}_k^{n+1} = \arg\max(\mathbf{u}_k^n)$ is the position of a maximum element in the selection vector, $\beta \geq 0$ is a handover hysteresis threshold.

10. The method of any preceding claim, wherein said first and second indications comprises at least one of an indication of throughput, a cell-edge throughput, a low percentile of throughput, a channel quality, a low percentile of signal to interference ratio and a load level.

11. The method of any preceding claim, wherein said first cell is provided by a macro base station and said second cell is provided by at least one small cell base station located within said first cell, said network node comprises said small cell base station and said step of providing comprises providing said first indication from said macro base station to said small cell base station.

12. The method of any preceding claim, comprising the step of providing said bias for collation with other bias for other small cell base stations by at least one of said macro base station and a network controller for transmission to user equipment within said macro cell.

13. The method of any preceding claim, comprising the step of transmitting said bias to user equipment within said macro cell to cause said user equipment to update their association.

14. A computer program product operable, when executed on a computer, to perform the method steps of any preceding claim.

15. A network node, comprising:

logic operable to provide a first indication of a first cell performance and a second indication of a second cell performance;
determining logic operable to determine from said first and second indications whether said first cell performance differs from said second cell performance; and

adjustment logic operable, if said first cell performance differs from said second cell performance, to adjust a bias for at least one of said first cell and said second cell to adjust a user equipment association with that cell.

$\mathbf{b}^{n+1}$ for UEs in the 1st Pico BS      $\mathbf{b}^{n+1}$ for UEs in the Mth Pico BS

$Q_1^n$      1st Pico BS      $Q_M^n$      Mth Pico BS

$b_1^n$   **Bias controller**     ...     **Bias controller**   $b_M^n$

$b_1^{n+1}$          $Q_0^n$      $b_M^{n+1}$

**KPI info channel**

$Q_0^n$

**Macro BS**    $\mathbf{b}^{n+1}$ for UEs in the Macro BS

$\mathbf{b}^{n+1}$

**Bias info channel**

$$\mathbf{b}^{n+1} = [b_1^{n+1}, \ldots, b_M^{n+1}]$$

Figure 1

$Q_m^n$   mth Pico BS KPI step n

mth Pico BS Bias controller

**Caution threshold**    **Comparator**    $Q_0^n$

Macro BS KPI step n

Step size

$b_m^n$

mth Pico BS bias step n    **Summator**

**Minimal bias**    **Limiter**    **Maximal bias**

$b_m^{n+1}$

mth Pico BS bias step n+1

Figure 2

| Macro BS | 1st Pico BS | ... | Mth Pico BS |

$Q_0^n$  $Q_1^n$  $Q_M^n$

Bias controller  $b_1^n$

$b_1^{n+1}$

Bias controller  $b_M^n$

$b_M^{n+1}$

RNC

$$\mathbf{b}^{n+1} = [b_1^{n+1}, \ldots, b_M^{n+1}]$$

for UEs in the Macro sector

Figure 3

Figure 4

Cell edge based decentralized bias SON    Fixed bias: 1dB Macro and 2dB Pico in carrier 2, 3dB Pico in carrier 1

Cell edge throughput, bps

Iteration

Figure 5

Figure 6

Figure 7

Figure 8

Figure 9

Europäisches
Patentamt

European
Patent Office

Office européen
des brevets

# EUROPEAN SEARCH REPORT

Application Number

EP 13 30 5093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/136083 A1 (KYOCERA CORP [JP]; NAKAMURA KAZUTAKA [JP]) 3 November 2011 (2011-11-03) * abstract * | 1-15 | INV. H04W36/04 |
| E | & EP 2 566 211 A1 (KYOCERA CORP [JP]) 6 March 2013 (2013-03-06) * abstract * * paragraph [0012] * * paragraph [0039] - paragraph [0042]; figure 2 * * paragraph [0050] * * paragraph [0059] - paragraph [0061] * * paragraph [0063] - paragraph [0068]; figure 5 * * paragraph [0125] * | 1-15 | ADD. H04W24/02 H04W36/22 H04W36/30 |
| X | WO 2011/129447 A1 (KYOCERA CORP [JP]; NAKAYAMA TAKU [JP]; OKINO KENTA [JP]) 20 October 2011 (2011-10-20) * abstract * & EP 2 560 426 A1 (KYOCERA CORP [JP]) 20 February 2013 (2013-02-20) * paragraph [0011] * * paragraph [0037]; figure 3 * * paragraph [0053] - paragraph [0054] * * paragraph [0072] - paragraph [0078]; figure 7 * | 1-3, 10-15 | |
| A | PANTECH: "Discussions on CRE bias", 3GPP DRAFT; R2-111293_DISCUSSIONS ON CRE BIAS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 15 February 2011 (2011-02-15), XP050493770, [retrieved on 2011-02-15] * the whole document * | 1-15 | TECHNICAL FIELDS SEARCHED (IPC) H04W |

The present search report has been drawn up for all claims

| Place of search | Date of completion of the search | Examiner |
|---|---|---|
| Munich | 12 July 2013 | Petit, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 30 5093

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2013

| Patent document cited in search report | Publication date | Patent family member(s) | | Publication date |
|---|---|---|---|---|
| WO 2011136083 A1 | 03-11-2011 | CN | 102884823 A | 16-01-2013 |
| | | EP | 2566211 A1 | 06-03-2013 |
| | | KR | 20130052558 A | 22-05-2013 |
| | | US | 2013045694 A1 | 21-02-2013 |
| | | WO | 2011136083 A1 | 03-11-2011 |
| WO 2011129447 A1 | 20-10-2011 | CN | 102845088 A | 26-12-2012 |
| | | EP | 2560426 A1 | 20-02-2013 |
| | | KR | 20130023221 A | 07-03-2013 |
| | | US | 2013028228 A1 | 31-01-2013 |
| | | WO | 2011129447 A1 | 20-10-2011 |

EPO FORM P0459